# FASCICULE DE BREVET EUROPEEN

(11) **EP 4 656 891 B1**
(45) Date de publication et mention de la délivrance du brevet: **15.07.2026**
(21) Numéro de dépôt: 25177076.4
(22) Date de dépôt: 16.05.2025
(51) Int. Cl.: F16B 33/00, F16B 43/00, F16B 37/14

(54) **RONDELLE D'ETANCHEITE POUR UNE CONNEXION ELECTRIQUE, ENSEMBLE DE PROTECTION DE CONNEXION ELECTRIQUE ET AERONEF**
DICHTUNGSSCHEIBE FÜR EINE ELEKTRISCHE VERBINDUNG, SCHUTZVORRICHTUNG FÜR ELEKTRISCHE VERBINDUNG UND LUFTFAHRZEUG
SEALING WASHER FOR AN ELECTRICAL CONNECTION, ASSEMBLY FOR PROTECTING AN ELECTRICAL CONNECTION AND AIRCRAFT

(30) Priorité: 29.05.2024 FR 2405540
(43) Date de publication de la demande: 03.12.2025
(73) Titulaire: AIRBUS OPERATIONS (S.A.S.), 31060 Toulouse (FR)
(72) Inventeur: BOISNIER, Benjamin, 31060 TOULOUSE (FR)
(74) Mandataire: Airbus-OPS SAS

(56) Documents cités:
- DE-A1- 102013 204 832
- US-A- 2 761 349
- US-A- 3 627 334

## Description

### DOMAINE TECHNIQUE

La présente invention concerne une rondelle d'étanchéité ainsi qu'un ensemble de protection de connexion électrique comprenant au moins une telle rondelle d'étanchéité, une rondelle de connexion et un capuchon. L'invention concerne également un aéronef comprenant une telle rondelle d'étanchéité ou un tel ensemble de protection.

### ÉTAT DE LA TECHNIQUE ANTÉRIEURE

Un aéronef comprend de nombreuses connexions mécaniques et électriques qu'il convient de protéger contre la corrosion. Des connexions électriques sont parfois réalisées en utilisant un câble dont au moins une extrémité est pourvue d'une rondelle de connexion (cosse à œillet) faite d'un matériau électriquement conducteur au travers de laquelle est insérée une vis de fixation. La vis de fixation permet de fixer la rondelle de connexion sur un élément de connexion électriquement conducteur créant ainsi un point de connexion électrique. Il peut s'agir par exemple d'un point de connexion à la masse ou encore d'un point de connexion à une équipotentielle, telle qu'une barre de bus (ou *busbar*)*.* Pour éviter que le point de connexion ainsi constitué ne se corrode, un mastic de protection est appliqué sur la tête de vis, la rondelle de connexion du câble et son environnement immédiat, afin d'assurer une protection contre l'humidité de tous ces éléments. Une telle application de mastic est contraignante dans la mesure où la qualité de la protection obtenue dépend de la qualité de l'application locale de mastic et requiert de surcroît la manipulation du mastic et d'un outil d'application du mastic, outre la manipulation des éléments de connexion eux-mêmes. De surcroît, ces manipulations ralentissent les opérations et sont rendues difficiles lorsque l'opérateur ne dispose que d'un accès restreint et d'une faible visibilité pour ce faire. Un autre inconvénient réside dans le fait qu'il faille gratter le mastic lors d'une opération de démontage, ce qui est long, fastidieux et génère des copeaux ou poussières de mastic. En outre, une telle opération de décapage endommage souvent la pièce concernée, ce qui implique de la remplacer. DE 10 2013 204832 A1 divulgue une rondelle d'étanchéité connue.

La situation peut être améliorée.

### EXPOSÉ DE L'INVENTION

Un objet de la présente invention est de faciliter la protection contre la corrosion de points de connexion électrique, notamment dans des systèmes d'aéronef.

A cet effet, il est proposé une rondelle d'étanchéité selon la revendication 1, faite d'un matériau étanche à l'eau et comprenant deux ergots périphériques configurés pour la préhension de la rondelle d'étanchéité, ladite rondelle d'étanchéité présentant en outre au moins deux pions détrompeurs.

Avantageusement, il est ainsi possible de positionner correctement et rapidement la rondelle d'étanchéité contre l'œillet terminal d'un câble de connexion électrique, y compris dans un endroit peu accessible.

Selon un mode de réalisation, les pions détrompeurs sont respectivement agencés sur des oreilles de la rondelle d'étanchéité.

Avantageusement et selon un mode de réalisation, le matériau de fabrication étanche à l'eau de la rondelle d'étanchéité est un silicone.

Un autre objet de l'invention est un ensemble de protection comprenant :
- une première rondelle, d'étanchéité, telle que précédemment décrite,
- une deuxième rondelle, dite de connexion, faite préférentiellement d'un matériau électriquement conducteur, et,
- un capuchon de protection,
ledit ensemble étant tel que la deuxième rondelle présente une rainure sur sa tranche, et l'intérieur du capuchon présentant un relief annulaire intérieur de forme complémentaire ou sensiblement complémentaire à la rainure de la deuxième rondelle.

Avantageusement, le capuchon comprend une fente, une ouverture ou encore un ergot.

L'invention concerne également un aéronef comprenant au moins une rondelle d'étanchéité telle que précédemment décrite ou un ensemble de connexion tel que décrit ci-avant.

### BRÈVE DESCRIPTION DES DESSINS

[Fig. 1] illustre schématiquement et en perspective une rondelle d'étanchéité anti-corrosion selon un mode de réalisation, positionnée en regard d'une cosse à œillet terminale d'un câble de connexion électrique ou d'une partie terminale d'une barre de bus ;
[Fig. 2] illustre en perspective la rondelle d'étanchéité déjà illustrée sur la Fig. 1 positionnée contre la cosse à œillet, elle aussi déjà représentée sur la Fig. 1 ;
[Fig. 3] illustre en perspective une rondelle dite rondelle de connexion présentant une rainure sur sa tranche, configurée selon un mode de réalisation pour être appliquée sur la cosse à œillet déjà représentée sur les Fig. 1 et Fig. 2 et pour être maintenue serrée contre la cosse à œillet grâce à une vis ou un boulon ;
[Fig. 4] illustre en perspective la rondelle de connexion déjà représentée sur la Fig. 3 lorsqu'elle est positionnée sur la cosse à œillet déjà représentée sur les Fig. 1 et Fig. 2 ;
[Fig. 5] illustre en perspective un capuchon de tête de vis comprenant un relief annulaire intérieur de forme complémentaire à la rainure de la rondelle de connexion déjà représentée sur les Fig.3 et Fig.4 et configuré pour s'emboiter sur la rondelle de connexion ;
[Fig. 6a] illustre en perspective un assemblage, selon un mode de réalisation, d'un point de connexion électrique à l'aide d'une vis, et des éléments de connexion déjà représentés sur les figures Fig.1 à Fig. 5 ;
[Fig. 6b] illustre en perspective une variante de l'assemblage du point de connexion déjà représenté sur la Fig. 6a ;
[Fig. 7a] illustre en perspective le point de connexion déjà représenté sur la Fig. 6a, après assemblage, selon un mode de réalisation ;
[Fig. 7b] illustre en perspective une variante du point de connexion déjà représenté sur la Fig. 7a ;
[Fig. 8] illustre en perspective une autre variante du point de connexion déjà représenté sur les Fig.7a et Fig. 7b ; et,
[Fig. 9] est une vue latérale d'un aéronef comprenant une rondelle d'étanchéité ou un point de connexion électrique selon un mode de réalisation.

### EXPOSÉ DÉTAILLÉ DE MODES DE RÉALISATION

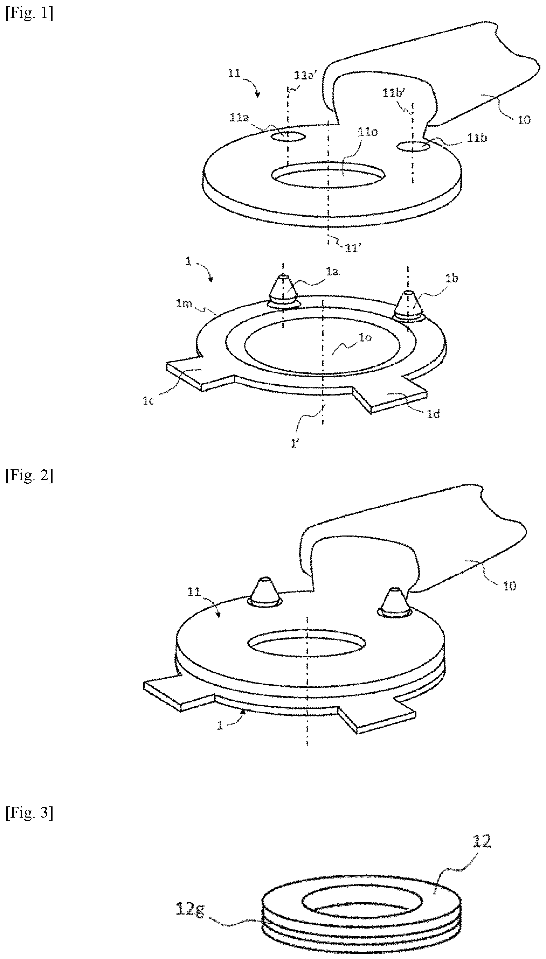

La **Fig. 1** représente schématiquement une rondelle d'étanchéité 1 positionnée en regard d'une cosse à œillet 11 qui est une partie terminale d'un câble de connexion électrique 10. La rondelle d'étanchéité 1 est une rondelle anti-corrosion dans la mesure où elle est faite d'un matériau étanche à l'eau et plus généralement aux liquides, ce qui évite toute corrosion de la rondelle d'étanchéité 1. Selon un mode de réalisation, la rondelle d'étanchéité 1 est fabriquée en silicone. Astucieusement et avantageusement, la rondelle d'étanchéité 1 comprend deux ergots de préhension 1c et 1d, encore appelés « oreilles » faisant saillie en périphérie de son corps 1m, ainsi que deux pions détrompeurs 1a et 1b sur une surface plane du corps de la rondelle d'étanchéité destinée à venir au contact de la cosse à œillet 11. Les pions détrompeurs 1a et 1b permettent de réaliser un positionnement rapide de la rondelle d'étanchéité 1 contre la cosse à œillet 11 selon une position prédéterminée. Pour ce faire, et selon l'exemple décrit, la cosse à œillet 11 présente deux ouvertures traversantes 11a et 11b configurées pour recevoir les pions détrompeurs 1a et 1b. Avantageusement, l'ouverture traversante 11a est agencée autour d'un axe central 11a' et l'ouverture traversante 11b est agencée autour d'un axe central 11b'. Avantageusement l'entraxe (ou la distance) entre les axes 11a' et 11b' est égal à la distance séparant les axes centraux des pions détrompeurs 1a et 1b, si bien qu'il n'existe qu'une position précise prédéterminée permettant de positionner la rondelle étanche contre l'œillet de la cosse à œillet 11 ou plus précisément contre la face de l'œillet de la cosse à œillet 11 qui est opposée à celle raccordée au câble de connexion électrique 10.

Le fait d'apposer la rondelle d'étanchéité 1 contre cette face de l'œillet de la cosse à œillet 11 permet de protéger contre la corrosion cette face de la cosse à œillet 11 lorsque cette dernière est fixée et maintenue en appui contre un élément de connexion tiers, de sorte à opérer un point de connexion électrique. Selon un mode de réalisation, les ergots de préhension 1c et 1d sont de forme rectangulaire ou carrée et présentent chacun des dimensions de nature à leur permettre d'être maintenus entre le pouce et l'index d'un opérateur d'assemblage de points de connexion électrique. Astucieusement les pions détrompeurs 1a et 1b font saillie sur une surface plane du corps annulaire 1m de la rondelle d'étanchéité 1, en bordure extérieure de la face de la rondelle d'étanchéité 1 qui les porte, et présentent chacun une forme de nature à être insérée dans une cavité ou une ouverture traversante réalisée en bordure extérieure de l'œillet de la cosse à œillet 11 du câble de connexion 10. Selon une variante de réalisation, les pions détrompeurs sont agencés non pas en bordure extérieure de la face de la rondelle d'étanchéité 1 qui les porte, mais sur des oreilles périphériques, de forme quelconque, agencées de manière semblable aux ergots de préhension 1c et 1d, mais pas aux mêmes endroits. Avantageusement, la rondelle d'étanchéité 1 présente une ouverture traversante centrale 1o agencée autour d'un axe central 1' et l'œillet de la cosse à œillet 11 présente une ouverture traversante 11o agencée autour d'un axe central 11'. Les ouvertures 1o et 11o permettent le passage d'une vis ou d'un boulon de fixation et de maintien pour la création d'un point de connexion électrique.

Selon un exemple de réalisation, la surface de la cosse à œillet 11 peut présenter une forme plane autour de l'ouverture traversante 11o. Selon une variante, la surface de la cosse à œillet 11 présente une surface creusée ou évasée autour de l'ouverture traversante 11o, configurée pour faciliter le positionnement ou le logement d'une tête de vis traversant l'ouverture traversante 11o.

La **Fig. 2** illustre la rondelle d'étanchéité 1 positionnée contre la cosse à œillet 11 du câble de connexion électrique 10. Cet exemple n'est pas limitatif et le câble peut être remplacé par un élément conducteur (une tôle mise en forme ou une barre de bus, par exemple). Il est possible de voir les extrémités des pions détrompeurs insérés dans les ouvertures traversantes de l'œillet de la cosse à œillet 11 et opérant alors un détrompage en position de nature à obtenir un positionnement prédéterminé rapide de la rondelle d'étanchéité 1 sur la face de la cosse à œillet opposée à la face reliée au câble de connexion électrique 10.

La **Fig. 3** illustre une rondelle 12 dite rondelle de connexion 12 présentant une rainure 12g sur toute la longueur de sa tranche, c'est-à-dire sur la bordure de la rondelle de connexion 12 séparant ses deux faces. Selon un mode de réalisation, la rondelle de connexion 12 est configurée pour être appliquée sur la cosse à œillet 11 et pour être maintenue serrée contre la cosse à œillet 11 grâce à une vis insérée dans les ouvertures centrales alignées de la rondelle d'étanchéité 1, de l'œillet de la cosse à œillet 11 et de la rondelle de connexion 12. Selon un mode de réalisation, le diamètre hors-tout de la rondelle de connexion 12 est inférieur à la distance séparant l'axe central de l'œillet de la cosse à œillet 11 et le point le plus proche des pions détrompeurs par rapport à cet axe.

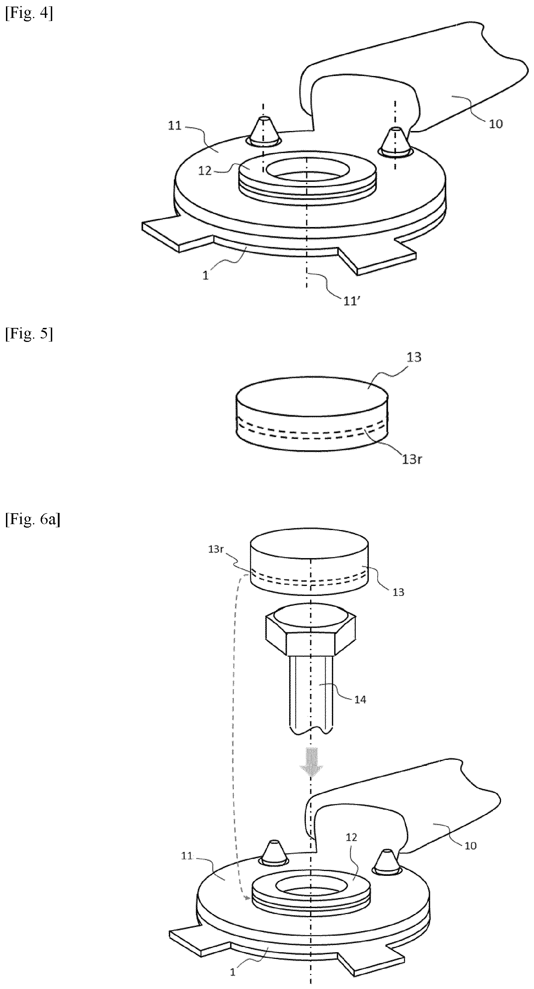

La **Fig. 4** représente la rondelle de connexion 12 positionnée sur la cosse à œillet 11 lorsque la cosse à œillet 11 est positionnée contre la rondelle d'étanchéité 1.

La **Fig. 5** représente un capuchon 13 de protection de tête de vis et de rondelle de connexion. Selon un mode de réalisation, le capuchon 13 comprend un relief annulaire intérieur 13r de forme complémentaire ou sensiblement complémentaire à la rainure 12g de la rondelle de connexion 12. Une forme sensiblement complémentaire à la rainure 12g désigne ici une forme qui n'est pas forcément strictement complémentaire à la forme de la rainure 12g mais qui l'est suffisamment pour que l'insertion du relief annulaire intérieur 13r du capuchon 13 dans la rainure opère un verrouillage mécanique en position et une étanchéité aux liquides ou à l'humidité permettant au capuchon 13 d'être maintenu en position sur la rondelle de connexion 12 recouverte par le capuchon 13. Ainsi le capuchon 13 opère une fonction de protection étanche du point de connexion électrique réalisé, tout comme le fait la rondelle d'étanchéité 1. Selon un mode de réalisation, la position précise du relief intérieur annulaire 13r à l'intérieur du capuchon 13 est prévue pour qu'un assemblage du capuchon 13 sur la rondelle de connexion 12 soit tel que le bord du capuchon 13 soit entièrement en contact avec la surface de l'œillet de la cosse à œillet 11 après assemblage du point de connexion pour obtenir un montage étanche à l'humidité.

La **Fig. 6a** représente un assemblage en cours d'un point de connexion électrique, selon un mode de réalisation. Le point de connexion est assemblé en utilisant une vis 14 insérée dans les ouvertures traversantes alignées des différents éléments de connexion que sont la rondelle de connexion 12, la cosse à œillet 11 et la rondelle d'étanchéité 1. Une flèche verticale orientée vers le bas symbolise l'insertion de la vis 14 utilisée pour le maintien des éléments de connexion sur un plan ou un substrat d'une pièce de connexion, par exemple un plan de masse ou une équipotentielle de type barre de bus (ou busbar, de l'anglais). Une autre flèche, en pointillés, illustre sur la Fig. 6a le positionnement du relief annulaire intérieur 13r du capuchon 13 dans la rainure 12g de la rondelle de connexion 12, lorsque le capuchon 13 est positionné pour protéger la tête de la vis 14 et la rondelle de connexion 12.

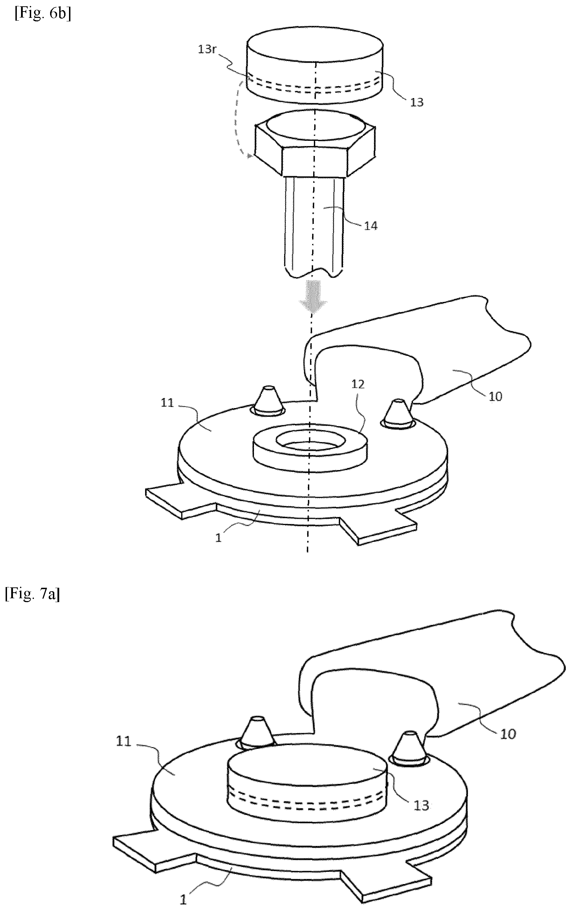

La Fig. **6b** représente une variante de l'assemblage en cours du point de connexion électrique, déjà décrit en relation avec la Fig. 6a, et selon lequel le relief annulaire intérieur 13r du capuchon 13 n'a pas vocation à se loger dans une rainure de la rondelle de connexion 12, mais à venir se clipser directement sous la bordure de la tête de la vis 13, ce qui est représenté par une flèche en pointillés sur la Fig. 6b. Cela permet avantageusement d'utiliser une rondelle dépourvue de rainure. Selon cette variante, il est préférable que la vis 14 présente une tête de vis de forme globalement circulaire.

La **Fig. 7a** représente un point de connexion réalisé après insertion de la vis 14, laquelle est maintenue par un écrou (non visible sur la figure) ou encore serrée dans un taraudage (non visible sur la figure) et après la mise en place du capuchon 13 de protection.

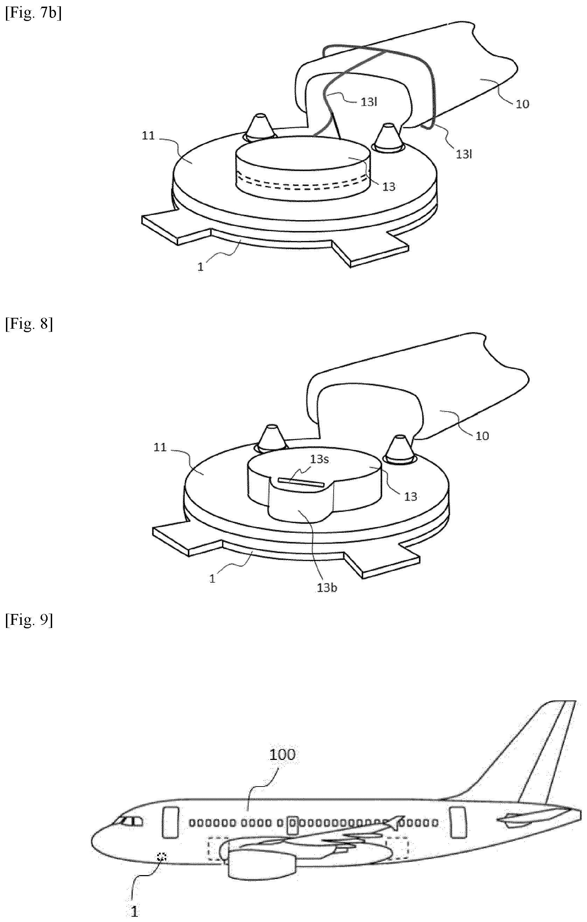

La **Fig. 7b** représente une variante du point de connexion décrit en relation avec la Fig. 7a, selon laquelle le capuchon 13 comprend une attache 13l (encore appelée « laisse ») dont une partie terminale ceinture le câble 10, ce qui permet avantageusement d'éviter sa chute lors d'une opération de montage ou de démontage. Avantageusement, le risque de présence d'un objet de type FOD (de l'acronyme anglais « Foreign Object Debris ») est amoindri lors d'une utilisation dans un aéronef.

La **Fig. 8** représente une variante du point de connexion déjà décrit en relation avec les Fig. 7a et Fig. 7b, selon laquelle le capuchon 13 comprend une surface proéminente ou faisant saillie 13b (encore appelé ergot 13b) et présente en outre une fente 13s définie selon un plan parallèle au sens d'insertion (pose) et de retrait (dépose) du capuchon 13 sur la tête de vis du point de connexion. Avantageusement, le capuchon 13 peut présenter une cavité de forme complémentaire ou sensiblement complémentaire à l'extrémité d'une tige d'un outil ou d'un tournevis plat, ce qui permet avantageusement de déposer le capuchon 13 en actionnant le tournevis ou plus largement l'outil ainsi adapté selon un mouvement de levier. Cela permet d'obtenir une aisance accrue et une rapidité accrue lors d'une opération de démontage.

Selon une variante, une partie du capuchon 13 fait saillie sur la surface du capuchon de sorte à former un ergot ou une encoche pour que le capuchon puisse être, là encore, déposé en faisant simplement levier avec un outil en prise contre l'ergot ainsi formé ou dans l'encoche ainsi formée.

Selon un mode de réalisation, le capuchon 13 comprend à la fois les éléments susmentionnés (fente, ergot, etc. et une attache de liaison pour le maintien à un câble ou à une tôle ou une barre de bus).

Selon un mode de réalisation, le capuchon 13 peut comprendre au moins une zone de fragilité prédéfinie et configurée pour se déchirer ou se cisailler lorsqu'un effort est appliqué sur le capuchon en vue d'une dépose de celui-ci. Cela permet avantageusement de démontrer une utilisation antérieure pour la protection d'un point de connexion.

La **Fig. 9** illustre un aéronef 100 comprenant au moins la rondelle d'étanchéité 1 ou une rondelle d'étanchéité semblable à la rondelle 1 ou encore au moins un point de connexion électrique tel que précédemment décrit, ce qui permet avantageusement de protéger tout ou partie de ce point de connexion électrique sans requérir l'application d'un mastic étanche. Un tel assemblage permet d'accroitre la vitesse de réalisation des opérations d'assemblage et de maintenance en relation avec le type de point de connexion électrique décrit.

## Revendications

1. Rondelle d'étanchéité (1) **caractérisée en ce que** ladite rondelle (1) est faite d'un matériau étanche à l'humidité et comprend deux ergots périphériques (1c, 1d) configurés pour la préhension de ladite rondelle d'étanchéité (1), et **en ce qu'**une surface de ladite rondelle (1) présente au moins deux pions détrompeurs (1a, 1b).

2. Rondelle d'étanchéité (1) selon la revendication 1, dans laquelle lesdits pions détrompeurs (1a, 1b) sont respectivement agencés sur des oreilles de ladite rondelle d'étanchéité (1).

3. Rondelle d'étanchéité (1) selon l'une des revendications 1 et 2, dont le matériau de fabrication étanche à l'humidité est un matériau de type silicone.

4. Ensemble de protection (1, 12, 13) comprenant :
- une première rondelle (1), d'étanchéité, selon l'une des revendications 1 à 3,
- une deuxième rondelle (12), de connexion, faite d'un matériau électriquement conducteur, et,
- un capuchon de protection (13),
ladite deuxième rondelle (12), de connexion, présentant une rainure (12g) sur sa tranche, et l'intérieur dudit capuchon (13) présentant un relief annulaire intérieur (13r) de forme complémentaire ou sensiblement complémentaire à ladite rainure (12g) de ladite deuxième rondelle (12).

5. Ensemble de protection selon la revendication 4, dans lequel ledit capuchon (13) comprend une fente et/ou une ouverture et/ou un ergot.

6. Aéronef (100) comprenant au moins une rondelle d'étanchéité (1) selon l'une des revendications 1 à 3 ou un ensemble de protection (1, 12, 13) selon l'une des revendications 4 et 5.

## Patentansprüche

1. Dichtungsscheibe (1), **dadurch gekennzeichnet, dass** die Scheibe (1) aus einem feuchtigkeitsdichten Material besteht und zwei umfängliche Lappen (1c, 1d) umfasst, die zum Ergreifen der Dichtungsscheibe (1) ausgebildet sind, und dass eine Oberfläche der Unterlegscheibe (1) mindestens zwei Codierstifte (1a, 1b) aufweist.

2. Dichtungsscheibe (1) nach Anspruch 1, wobei die Codierstifte (1a, 1b) jeweils auf Flügeln der Dichtungsscheibe (1) angeordnet sind.

3. Dichtungsscheibe (1) nach einem der Ansprüche 1 und 2, deren feuchtigkeitsbeständiges Material ein Material vom Silikontyp ist.

4. Schutzanordnung (1, 12, 13), umfassend:
- eine erste Dichtungsscheibe (1) nach einem der Ansprüche 1 bis 3,
- eine zweite Scheibe (12), zur Verbindung, die aus einem elektrisch leitfähigen Material besteht, und
- eine Schutzkappe (13),
wobei die zweite Scheibe (12), zur Verbindung, an ihrer Schmalseite eine Nut (12g) aufweist und wobei die Innenseite der Kappe (13) eine innere ringförmige Erhebung (13r) aufweist, deren Form komplementär oder im Wesentlichen komplementär zu der Nut (12g) der zweiten Scheibe (12) ist.

5. Schutzanordnung nach Anspruch 4, wobei die Kappe (13) einen Schlitz und/oder eine Öffnung und/oder einen Lappen umfasst.

6. Luftfahrzeug (100), umfassend mindestens eine Dichtungsscheibe (1) nach einem der Ansprüche 1 bis 3 oder eine Schutzanordnung (1, 12, 13) nach einem der Ansprüche 4 und 5.

## Claims

1. Sealing washer (1), **characterized in that** said washer (1) is made of a moisture-tight material and comprises two peripheral tabs (1c, 1d) configured for gripping said sealing washer (1), and **in that** a surface of said washer (1) has at least two locating pins (1a, 1b) .

2. Sealing washer (1) according to Claim 1, wherein said locating pins (1a, 1b) are respectively arranged on lugs of said sealing washer (1).

3. Sealing washer (1) according to either of Claims 1 and 2, the moisture-tight manufacturing material of which is a silicone material.

4. Protective assembly (1, 12, 13) comprising:
- a sealing first washer (1) according to one of Claims 1 to 3,
- a connecting second washer (12) made of an electrically conductive material, and
- a protective cap (13),
said connecting second washer (12) having a groove (12g) on its edge face, and the inside of said cap (13) having an inner annular relief (13r) with a complementary or substantially complementary shape to said groove (12g) of said second washer (12).

5. Protective assembly according to Claim 4, wherein said cap (13) comprises a slot and/or an opening and/or a tab.

6. Aircraft (100) comprising at least one sealing washer (1) according to one of Claims 1 to 3 or a protective assembly (1, 12, 13) according to either of Claims 4 and 5.
